# EUROPÄISCHE PATENTSCHRIFT

(11) **EP 4 429 924 B1**
(45) Veröffentlichungstag und Bekanntmachung des Hinweises auf die Patenterteilung: **30.04.2025**
(21) Anmeldenummer: 22818785.2
(22) Anmeldetag: 21.11.2022
(51) Int. Cl.: B60W 30/14, B60W 60/00, B60W 50/00

(54) **VERFAHREN UND VORRICHTUNG ZUR LÄNGSREGELUNG EINES FAHRZEUGS**
METHOD AND DEVICE FOR THE LONGITUDINALCONTROL OF A VEHICLE
PROCÉDÉ ET DISPOSITIF DE COMMANDE LONGITUDINALE D'UN VÉHICULE

(30) Priorität: 30.11.2021 DE 102021213483
(43) Veröffentlichungstag der Anmeldung: 18.09.2024
(73) Patentinhaber: Mercedes-Benz Group AG, 70372 Stuttgart (DE); Robert Bosch GmbH, 70469 Stuttgart (DE)
(72) Erfinder: HUSKIC, Goran, 70374 Stuttgart (DE); OVEISI, Atta, 70734 Fellbach (DE); FÜRSICH, Alexander, 70180 Stuttgart (DE); ROTHERMEL, Thomas, 71272 Renningen (DE); BOESCH, Peter, 71229 Leonberg (DE); KEMPF, André, 70563 Stuttgart (DE); KUHN, Klaus-Peter, 73269 Hochdorf (DE)
(74) Vertreter: Liedtke & Partner Patentanwälte
(86) Internationale Anmeldenummer: PCT/EP2022/082611
(87) Internationale Veröffentlichungsnummer: WO 2023/099260

(56) Entgegenhaltungen:
- DE-A1- 102011 102 435
- DE-A1- 19 509 492
- DE-B3- 102017 010 180

## Beschreibung

Die Erfindung betrifft ein Verfahren zur Längsregelung eines Fahrzeugs.

Die Erfindung betrifft weiterhin eine Vorrichtung zur Längsregelung eines Fahrzeugs.

Aus der DE 10 2017 010 180 B3 sind eine Vorrichtung und ein Verfahren zur Regelung einer Längsposition eines Fahrzeugs mittels eines Längspositionsreglers, der aus einer längsdynamischen Vorsteuersollgröße und aus längsdynamischen Regelfehlergrößen ein Längsbeschleunigungsstellsignal für eine unterlagerte Beschleunigungsregeleinheit erzeugt, bekannt. Dabei werden ein aktueller, einem aktuellen Zeitpunkt entsprechender Regelreferenzpunkt und ein vorausliegender, einem vorgebbaren Vorausschauzeitpunkt entsprechender Regelreferenzpunkt als regelrelevante Zeitpunkte bestimmt. Für jeden der Regelreferenzpunkte werden aktuelle oder prädizierte Ist-Soll-Abweichungen einer Längsposition, einer Fahrgeschwindigkeit und einer Beschleunigung ermittelt und der Bildung der längsdynamischen Regelfehlergrößen zugrunde gelegt. Weiterhin werden für jeden der Regelreferenzpunkte Sollwerte der Beschleunigung bestimmt und der Bildung der längsdynamischen Vorsteuersollgröße zugrunde gelegt. Dabei wird die längsdynamische Vorsteuersollgröße gebildet, indem die für die Regelreferenzpunkte bestimmten Sollwerte der Beschleunigung miteinander gewichtet summiert werden.

Weiterhin sind aus der DE 195 09 492 A1 ein Verfahren und eine Vorrichtung zur Begrenzung einer Geschwindigkeit eines Kraftfahrzeugs auf eine einstellbare Höchstgeschwindigkeit bekannt. Das Verfahren umfasst einen beschleunigungsregelnden Systemeingriff mit einem abhängig von einer Differenz zwischen Höchstgeschwindigkeit und Istgeschwindigkeit vorgegebenen Beschleunigungssollwert, wenn die Differenz zwischen eingestellter Höchstgeschwindigkeit und Istgeschwindigkeit größer als ein vorgegebener Wert ist und eine Istbeschleunigung den Beschleunigungssollwert erreicht.

Das Verfahren umfasst weiterhin einen geschwindigkeitsregelnden Systemeingriff, wenn die Differenz zwischen Höchstgeschwindigkeit und Istgeschwindigkeit kleiner als der vorgegebene Wert ist und eine fahrerangeforderte Geschwindigkeit über der Höchstgeschwindigkeit liegt.

Die DE 10 2011 102 435 A1 beschreibt ein Verfahren zum Betrieb eines längsführenden Fahrerassistenzsystems eines Kraftfahrzeugs, wobei abhängig von einem Regeldatum eine Geschwindigkeit des Kraftfahrzeugs geregelt wird. Als weitere Regeldaten werden Kurvendaten bezüglich einer als nächstes durch das Kraftfahrzeug zu durchfahrenden Kurve bei der Regelung berücksichtigt.

Der Erfindung liegt die Aufgabe zu Grunde, ein neuartiges Verfahren und eine neuartige Vorrichtung zur Längsregelung eines Fahrzeugs anzugeben.

Die Aufgabe wird erfindungsgemäß gelöst durch ein Verfahren, welches die im Anspruch 1 angegebenen Merkmale aufweist, und durch eine Vorrichtung, welche die im Anspruch 6 angegebenen Merkmale aufweist.

Vorteilhafte Ausgestaltungen der Erfindung sind Gegenstand der Unteransprüche.

In dem erfindungsgemäßen Verfahren zur Längsregelung eines Fahrzeugs in Abhängigkeit einer Solltrajektorie, welche eine Reihe von vom Fahrzeug über die Zeit einzunehmenden Soll-Positionen vorgibt, wird basierend auf einem Ist-Zustand des Fahrzeugs eine Stellbeschleunigung zur Trajektorienregelung, mittels welcher das Fahrzeug gemäß Vorgaben der Solltrajektorie beschleunigt werden soll, ermittelt. Basierend auf einer Ist-Geschwindigkeit des Fahrzeugs und einer vorgegebenen Maximalgeschwindigkeit, welche bei einer Abfahrt der Soll-Trajektorie nicht überschritten werden soll, wird eine Stellbeschleunigung für eine Geschwindigkeitsregelung ermittelt, mittels welcher das Fahrzeug beschleunigt werden soll, um es mit der Maximalgeschwindigkeit zu führen. Beide Stellbeschleunigungen werden einem Arbiter zugeführt, welcher aus diesen eine resultierende Stellbeschleunigung ermittelt, wobei das Fahrzeug gemäß der resultierenden Stellbeschleunigung beschleunigt wird.

Eine Trajektorienregelung eines automatisiert, insbesondere hochautomatisiert oder autonom fahrenden Fahrzeugs, ist eine grundlegende Voraussetzung zur Realisierung der automatisierten Fahrfunktion. Hierbei wird basierend auf Daten einer Umgebungserfassung entschieden, welche Aktionen das Fahrzeug zukünftig ausführen soll. Das Ergebnis dieser Entscheidung ist eine Trajektorie, welche beispielsweise eine Position des Fahrzeugs auf einer Fahrbahn über die Zeit abbildet und als Bewegungsreferenz in einer bekannten Fahrzeugumgebung dient. Die Trajektorienregelung ist dabei vorgesehen, dass der Trajektorie so genau wie möglich gefolgt wird. Falls sich aus irgendeinem Grund ein größerer Längspositionsregelfehler aufgebaut hat, entspricht eine Trajektorienvorgabe an der Soll-Position nicht einer Trajektorienvorgabe an einer Ist-Position auf der Fahrbahn, an welcher sich das Fahrzeug aktuell befindet. Das heißt, eine "Soll-Zeit" läuft weiter.

Ein zur automatisierten Steuerung des Fahrzeugs beispielsweise vorgesehener Regelkreis ist ein komplexes System mit verschiedenen Systemlimitierungen, die berücksichtigt werden müssen. In einem solchen System spielt insbesondere eine Geschwindigkeitslimitierung eine wichtige Rolle. Beispielsweise ist für das Fahrzeug eine definierte Maximalgeschwindigkeit, zum Beispiel weniger als 130 km/h, als Systembeschränkung vorgegeben und gleichzeitig müssen gesetzliche Geschwindigkeitsbeschränkungen berücksichtigt werden. Weiterhin kann eine maximal erlaubte Abweichung von einer in der vorgegebenen Solltrajektorie hinterlegten Trajektoriengeschwindigkeit vorgesehen sein. Diese Beschränkungen müssen beachtet und richtig eingeordnet werden, insbesondere auch dann, wenn eine Diskrepanz zwischen einer Ist-Position des Fahrzeugs und einer aus der Solltrajektorie abgeleiteten Soll-Position vorliegt.

Mittels des vorliegenden Verfahrens ist eine Berücksichtigung aller vorgenannten Beschränkungen möglich, so dass eine zuverlässige Trajektorienregelung mit dem Ziel, eine geplante Position zum zugehörigen Zeitpunkt gemäß einer Solltrajektorie zu erreichen, realisiert werden kann. Dabei werden die als Sollgröße vorgegebene Stellbeschleunigung zur Trajektorienregelung und/oder die Stellbeschleunigung für die Geschwindigkeitsregelung durch die resultierende Stellbeschleunigung limitiert, wenn diese nicht zur Vorgabe der Ist-Position passen. Dies kann beispielsweise dann der Fall sein, wenn sich ein Längspositionsregelfehler aufgebaut hat.

Im Gegensatz zu herkömmlichen Ansätzen zum automatisierten Betrieb eines Fahrzeugs, bei welchen eine Geschwindigkeitslimitierung im Allgemeinen parallel zur Trajektorienregelung abläuft und somit stets die Regelgüte beeinflusst, ist es mit dem vorliegenden Verfahren möglich, die Limitierung nur kurz vor dem Erreichen eines Geschwindigkeitslimits zu aktivieren. Daraus folgend kann die Regelgüte bis zu diesem Zeitpunkt erhalten bleiben. Dennoch kann die Aktivierung ausreichend früh erfolgen, um eine Überschreitung des Geschwindigkeitslimits sicher zu vermeiden.

Das heißt, mittels des vorliegenden Verfahrens können Geschwindigkeitslimits bzw. Geschwindigkeitsbeschränkungen in einem komplexen automatisierten Fahrzeug zuverlässig beachtet und richtig eingeordnet werden, auch wenn eine Diskrepanz zwischen der Ist-Position und der Soll-Position vorliegt. Dabei beeinträchtigt die Geschwindigkeitsbeschränkung nicht die ganze Zeit die Trajektorienregelung, sondern insbesondere nur dann, wenn die Gefahr besteht, dass Geschwindigkeitslimits bzw. Geschwindigkeitsbeschränkungen verletzt werden.

Weiterhin wird die vorgegebene Maximalgeschwindigkeit aus einem Minimum aus einer maximalen Trajektoriengeschwindigkeit, einer gesetzlich zulässigen Maximalgeschwindigkeit und einer absoluten systemdefinierten Maximalgeschwindigkeit ermittelt. Dies ermöglicht eine besonders zuverlässige Bestimmung der vorgegebenen Maximalgeschwindigkeit.

Dabei wird die maximale Trajektoriengeschwindigkeit aus einer Summe einer in der Solltrajektorie vorgegebenen örtlichen Referenzgeschwindigkeit an einer Ist-Position des Fahrzeugs und einer maximal erlaubten Abweichung der örtlichen Referenzgeschwindigkeit in Abhängigkeit von der Ist-Geschwindigkeit und einer Krümmung der Solltrajektorie an der Ist-Position des Fahrzeugs ermittelt. Dies ermöglicht auch bei größerer Diskrepanz zwischen Ist-Position und Soll-Position des Fahrzeugs eine zuverlässige Limitierung der Stellbeschleunigung an der Ist-Position.

In einer möglichen Ausgestaltung des Verfahrens wird bei der Ermittlung der Stellbeschleunigung eine Krümmung der Solltrajektorie berücksichtigt. Somit kann eine sichere Trajektorienregelung realisiert werden.

In einer weiteren möglichen Ausgestaltung des Verfahrens wird der Ist-Zustand des Fahrzeugs zumindest aus der Ist-Geschwindigkeit, einer Ist-Beschleunigung und/oder einer Ist-Position des Fahrzeugs gebildet. Mittels dieser Größen ist der Ist-Zustand sehr gut abbildbar, so dass eine zuverlässige Bestimmung der Stellbeschleunigung zur Trajektorienregelung erfolgen kann.

In einer weiteren möglichen Ausgestaltung des Verfahrens wird die Solltrajektorie einem Trajektorienregler zugeführt, mittels welchem anhand der Regler-Stellbeschleunigung das Fahrzeug gemäß den Vorgaben der Solltrajektorie beschleunigt werden soll. Die resultierende Stellbeschleunigung wird einer dem Trajektorienregler unterlagerten Beschleunigungsregeleinheit zugeführt, welcher eine reale Beschleunigung des Fahrzeugs steuert und/oder regelt.

In einer weiteren möglichen Ausgestaltung des Verfahrens wird dann, wenn die resultierende Stellbeschleunigung einen negativen Wert annimmt, das Fahrzeug verzögert. Dies ermöglicht Verzögerungen des Fahrzeugs und somit einen besonders sicheren Betrieb des Fahrzeugs.

Die erfindungsgemäße Vorrichtung zur Längsregelung eines Fahrzeugs in Abhängigkeit einer Solltrajektorie, welche eine Reihe von vom Fahrzeug über die Zeit einzunehmenden Soll-Positionen vorgibt, umfasst einen Trajektorienregler, welcher anhand einer diesem zugeführten Solltrajektorie basierend auf einem Ist-Zustand des Fahrzeugs eine Stellbeschleunigung zur Trajektorienregelung, mittels welcher das Fahrzeug gemäß Vorgaben der Solltrajektorie beschleunigt werden soll, ermittelt. Weiterhin umfasst die Vorrichtung einen Geschwindigkeitsregler, welcher basierend auf einer Ist-Geschwindigkeit des Fahrzeugs und einer vorgebbaren Maximalgeschwindigkeit, welche bei einer Abfahrt der Soll-Trajektorie nicht überschritten werden soll, eine Stellbeschleunigung für eine Geschwindigkeitsregelung ermittelt, mittels welcher das Fahrzeug beschleunigt werden soll, um es mit der Maximalgeschwindigkeit zu führen. Ferner umfasst die Vorrichtung einen Arbiter, welcher anhand der beiden ermittelten Stellbeschleunigungen eine resultierende Stellbeschleunigung ermittelt, und eine dem Trajektorienregler unterlagerte Beschleunigungsregeleinheit, welche das Fahrzeug gemäß der resultierenden Stellbeschleunigung beschleunigt.

Mittels der vorliegenden Vorrichtung ist eine zuverlässige Trajektorienregelung mit dem Ziel, eine geplante Position zum zugehörigen Zeitpunkt gemäß einer Solltrajektorie zu erreichen, möglich. Dabei sind die als Sollgröße vorgegebene Stellbeschleunigung zur Trajektorienregelung und/oder die Stellbeschleunigung für die Geschwindigkeitsregelung durch die resultierende Stellbeschleunigung limitierbar, wenn diese nicht zur Vorgabe der Ist-Position passen. Dies kann beispielsweise dann der Fall sein, wenn sich ein Längspositionsregelfehler aufgebaut hat.

Im Gegensatz zu herkömmlichen Ansätzen zum automatisierten Betrieb eines Fahrzeugs, bei welchen eine Geschwindigkeitslimitierung im Allgemeinen parallel zur Trajektorienregelung abläuft und somit stets die Regelgüte beeinflusst, ist es mit der vorliegenden Vorrichtung möglich, die Limitierung nur kurz vor dem Erreichen eines Geschwindigkeitslimits zu aktivieren. Daraus folgend kann die Regelgüte bis zu diesem Zeitpunkt erhalten bleiben. Dennoch kann die Aktivierung ausreichend früh erfolgen, um eine Überschreitung des Geschwindigkeitslimits sicher zu vermeiden. Bei der Aktivierung der Limitierung kurz vor dem Erreichen des Geschwindigkeitslimits wird mittels des Trajektorienreglers insbesondere auf eine Geschwindigkeitsbeschränkung umgeschaltet bzw. wird eine vorhandene Stellbeschleunigung überblendet. Mittels des Trajektorienreglers kann somit eine vollständige Lösung zur Trajektorienregelung eines automatisiert fahrenden Fahrzeugs realisiert werden.

Das heißt, mittels der Vorrichtung können Geschwindigkeitslimits bzw. Geschwindigkeitsbeschränkungen in einem komplexen automatisierten Fahrzeug zuverlässig beachtet und richtig eingeordnet werden, auch wenn eine Diskrepanz zwischen der Ist-Position und der Soll-Position vorliegt. Dabei beeinträchtigt die Geschwindigkeitsbeschränkung nicht die ganze Zeit die Trajektorienregelung, sondern insbesondere nur dann, wenn die Gefahr besteht, dass Geschwindigkeitslimits bzw. Geschwindigkeitsbeschränkungen verletzt werden.

In einer möglichen Ausgestaltung der Vorrichtung ist die Beschleunigungsregeleinheit ein Fahrzeugbremssystem. Mittels diesem ist die resultierende Stellbeschleunigung einfach und zuverlässig einstellbar.

Ausführungsbeispiele der Erfindung werden im Folgenden anhand von Zeichnungen näher erläutert.

Dabei zeigen:
- Fig. 1: schematisch eine Draufsicht einer Verkehrssituation mit einem Fahrzeug in einer Ist-Position und einer Soll-Position,
- Fig. 2: schematisch zeitliche Verläufe von Geschwindigkeiten für ein Fahrzeug,
- Fig. 3: schematisch ein Blockschaltbild einer Vorrichtung zur Längsregelung eines Fahrzeugs,
- Fig. 4: schematisch ein Blockschaltbild eines Geschwindigkeitsreglers eines Fahrzeugs und
- Fig. 5: schematisch ein Blockschaltbild eines Arbiters zur Arbitrierung zwischen einer Trajektorien- und einer Geschwindigkeitsregelung eines Fahrzeugs.

Einander entsprechende Teile sind in allen Figuren mit den gleichen Bezugszeichen versehen.

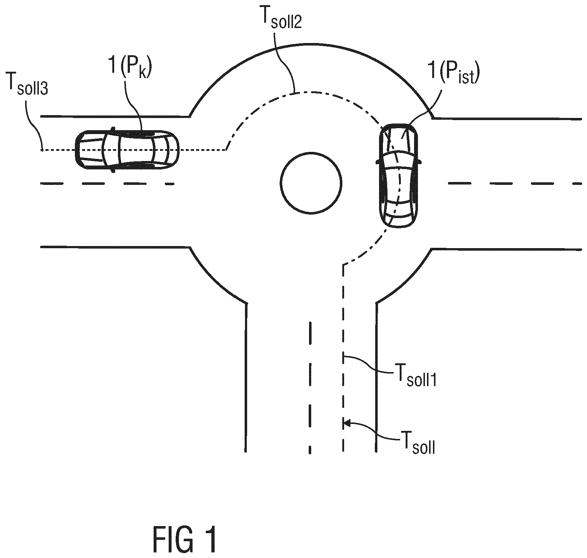

In Figur 1 ist eine Draufsicht einer Verkehrssituation mit einem Fahrzeug 1 in einer Ist-Position Pᵢₛₜ und einer Soll-Position Pₖ sowie einer Solltrajektorie Tₛₒₗₗ mit mehreren Trajektorienabschnitten Tₛₒₗₗ₁ bis Tₛₒₗₗ₃ dargestellt.

Das Fahrzeug 1 ist zu einem automatisierten, insbesondere hochautomatisierten oder autonomen Fahrbetrieb ausgebildet. Zur Realisierung einer solchen automatisierten Fahrfunktion ist eine Trajektorienregelung grundlegende Voraussetzung.

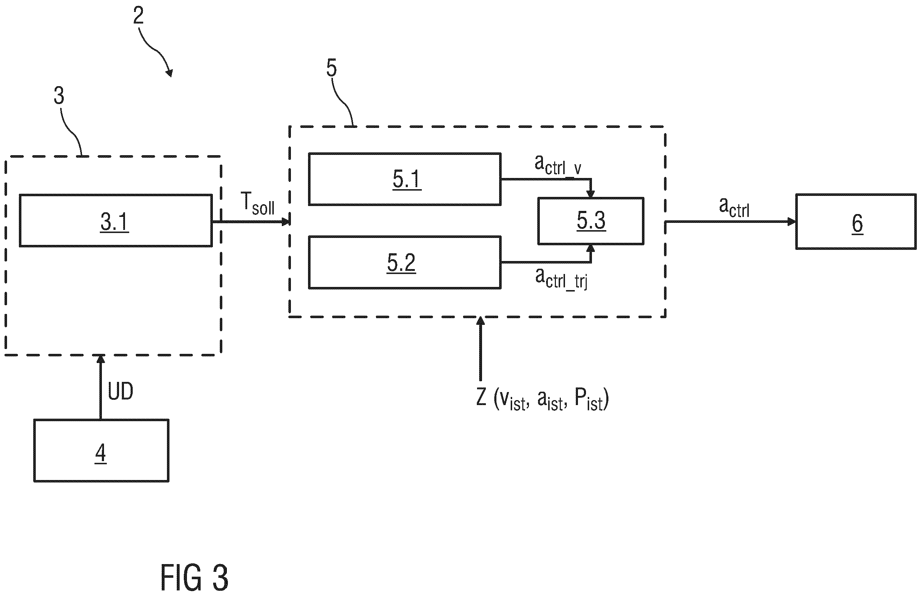

Bei dieser Trajektorienregelung wird basierend auf in Figur 3 näher gezeigten Daten UD einer Umgebungserfassung entschieden, welche Aktionen das Fahrzeug 1 zukünftig ausführen soll. Das Ergebnis dieser Entscheidung ist die Solltrajektorie Tₛₒₗₗ, welche beispielsweise eine Position des Fahrzeugs 1 auf einer Fahrbahn über die Zeit t abbildet und als Bewegungsreferenz in einer bekannten Fahrzeugumgebung dient. Die Trajektorienregelung ist dabei vorgesehen, dass der Trajektorie so genau wie möglich gefolgt wird. Falls sich aus irgendeinem Grund ein größerer Längspositionsregelfehler aufgebaut hat, entspricht eine Trajektorienvorgabe an der Soll-Position Pₖ nicht einer Trajektorienvorgabe an der Ist-Position Pᵢₛₜ auf der Fahrbahn, an welcher sich das Fahrzeug 1 aktuell befindet. Das heißt, eine "Soll-Zeit" läuft weiter.

In der Darstellung ist am Beispiel eines Kreisverkehrs gezeigt, dass sich die Ist-Position Pᵢₛₜ des automatisiert fahrenden Fahrzeugs 1 hinter der Soll-Position Pₖ befindet. Die Ist-Position Pᵢₛₜ befindet sich dabei im Kreisverkehr, während sich die Soll-Position Pₖ bereits außerhalb des Kreisverkehrs nach einem Verlassen desselben befindet.

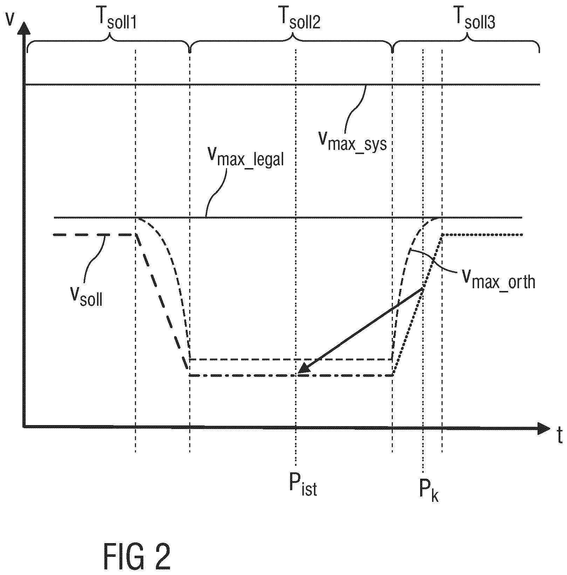

Figur 2 zeigt einen Verlauf von Geschwindigkeiten v für das Fahrzeug 1 in Abhängigkeit von der Zeit t, wobei die Geschwindigkeiten v eine maximale Trajektoriengeschwindigkeit v_{max_orth}, eine gesetzlich zulässige Maximalgeschwindigkeit v_{max_legal}, eine absolute systemdefinierte Maximalgeschwindigkeit v_{max_sys} und eine aus der Solltrajektorie Tₛₒₗₗ abgeleitete Soll-Geschwindigkeit vₛₒₗₗ umfassen.

Dabei ist gemäß dem der Solltrajektorie Tₛₒₗₗ zugeordneten Geschwindigkeitsprofil mit der Soll-Geschwindigkeit vₛₒₗₗ vorgesehen, dass das Fahrzeug 1 innerhalb des Kreisverkehrs auf dem Trajektorienabschnitt Tₛₒₗₗ₂ mit niedriger konstanter Geschwindigkeit v fahren soll und auf dem Trajektorienabschnitt Tₛₒₗₗ₃ nach dem Kreisverkehr solange stärker beschleunigt werden soll, bis eine höhere Geschwindigkeit v erreicht ist. Das für den Trajektorienabschnitt Tₛₒₗₗ₃ vorgesehene Geschwindigkeitsprofil ist dabei nicht zur Anwendung für eine Straßengeometrie im Trajektorienabschnitt Tₛₒₗₗ₂ geeignet.

Da jedoch, wie in Figur 1 dargestellt, der zeitliche Referenzpunkt, das heißt die Soll-Position Pₖ im Trajektorienabschnitt Tₛₒₗₗ₃, und der örtliche Referenzpunkt, das heißt die Ist-Position Pᵢₛₜ im Trajektorienabschnitt Tₛₒₗₗ₂, weit auseinander liegen, besteht die Gefahr, dass sich das Fahrzeug 1 innerhalb des Kreisverkehrs auf dem Trajektorienabschnitt Tₛₒₗₗ₂ befindet und automatisiert beschleunigt, weil der zeitliche Referenzpunkt örtlich bereits weiter voraus liegt, vorliegend auf einer dem Kreisverkehr nachfolgenden Geraden im Trajektorienabschnitt Tₛₒₗₗ₃.

In Figur 3 ist ein Blockschaltbild eines möglichen Ausführungsbeispiels einer Vorrichtung 2 zur Längsregelung eines Fahrzeugs 1 dargestellt.

Die Vorrichtung 2 umfasst eine erste Recheneinheit 3 mit einem Trajektorienplanungsmodul 3.1, welches anhand von mittels einer Umgebungserfassungssensorik 4 erfassten Daten UD die Solltrajektorie Tₛₒₗₗ plant.

Um das anhand der Figuren 1 und 2 dargestellte Problem zu lösen, dass bei einer Abweichung der Ist-Position Pᵢₛₜ von der Soll-Position Pₖ das Fahrzeug 1 im automatisierten Fahrbetrieb mit unangepasster Geschwindigkeit v bewegt wird, wird die Solltrajektorie Tₛₒₗₗ einer weiteren Recheneinheit 5 mit einem Geschwindigkeitsregler 5.1, einem Trajektorienregler 5.2 und einem Arbiter 5.3 zugeführt.

Eine mittels des Trajektorienreglers 5.2 durchgeführte Trajektorienregelung und eine mittels des Geschwindigkeitsreglers 5.1 durchgeführte Geschwindigkeitslimitierung laufen parallel und Ausgänge der beiden Regler müssen koordiniert werden.

Mittels des Trajektorienreglers 5.2 wird anhand der diesem zugeführten Solltrajektorie Tₛₒₗₗ basierend auf einem Ist-Zustand Z des Fahrzeugs 1 eine Stellbeschleunigung a_{ctrl_trj} zur Trajektorienregelung, mittels welcher das Fahrzeug 1 gemäß Vorgaben der Solltrajektorie Tₛₒₗₗ beschleunigt werden soll, ermittelt. Der Ist-Zustand Z des Fahrzeugs 1 ist dabei beispielsweise durch eine Ist-Geschwindigkeit vᵢₛₜ, eine Ist-Beschleunigung aᵢₛₜ und die Ist-Position Pᵢₛₜ des Fahrzeugs 1 gekennzeichnet.

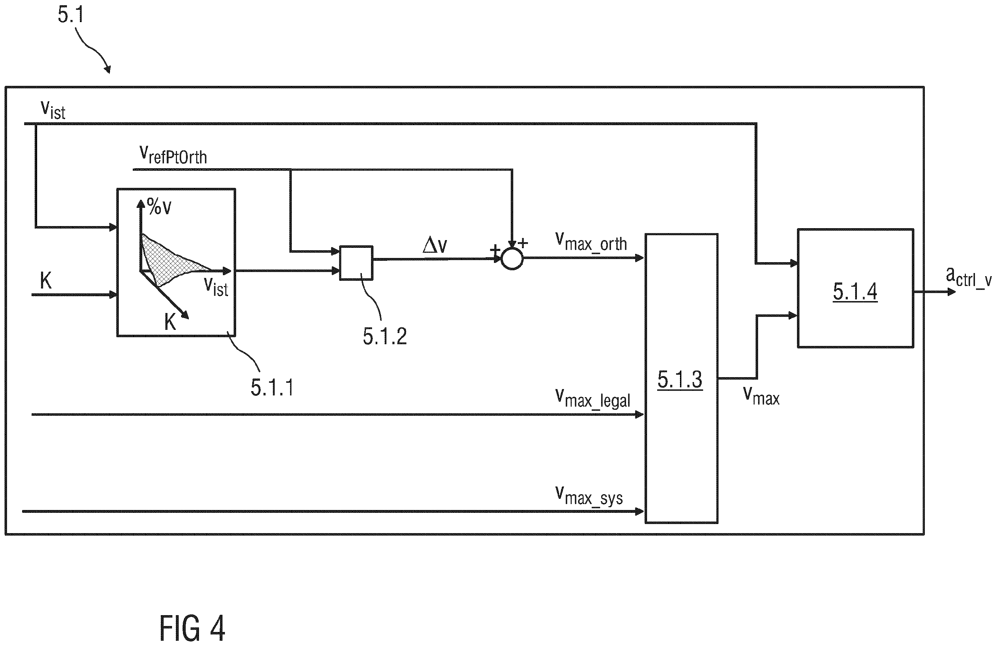

Weiterhin wird mittels des Geschwindigkeitsreglers 5.1 eine Stellbeschleunigung a_{ctrl_v} für eine Geschwindigkeitsregelung ermittelt, mittels welcher das Fahrzeug 1 beschleunigt werden soll, um es mit einer in Figur 4 näher dargestellten Maximalgeschwindigkeit vₘₐₓ zu führen.

Die beiden ermittelten Stellbeschleunigungen a_{ctrl_trj}, a_{ctrl_v} werden dem Arbiter 5.3 zugeführt, welcher daraus eine resultierende Stellbeschleunigung a_{ctrl} ermittelt.

Die resultierende Stellbeschleunigung a_{ctrl} wird einer dem Trajektorienregler 5.2 unterlagerte Beschleunigungsregeleinheit 6 zugeführt, welche das Fahrzeug 1 gemäß der resultierenden Stellbeschleunigung a_{ctrl} beschleunigt. Die Beschleunigungsregeleinheit 6 ist beispielsweise ein Fahrzeugbremssystem.

Das heißt, mittels der Trajektorienregelung wird das Fahrzeug 1 derart gesteuert, dass dieses der Soll-Trajektorie Tₛₒₗₗ folgt, und mittels der Geschwindigkeitslimitierung zusammen mit dem Arbiter 5.3 wird das Fahrzeug 1 in definierten Geschwindigkeitsgrenzen gehalten.

In Figur 4 ist ein Blockschaltbild eines möglichen Ausführungsbeispiels des Geschwindigkeitsreglers 5.1 gemäß Figur 3 dargestellt.

Der Geschwindigkeitsregler 5.1 umfasst eine Kennlinie 5.1.1, einen Multiplikator 5.1.2, eine Begrenzungseinheit 5.1.3 und eine Regeleinheit 5.1.4 und ermittelt basierend auf der insbesondere gemessenen Ist-Geschwindigkeit vᵢₛₜ des Fahrzeugs 1 und einer vorgebbaren Maximalgeschwindigkeit vₘₐₓ, welche bei einer Abfahrt der Soll-Trajektorie Tₛₒₗₗ nicht überschritten werden soll, die Stellbeschleunigung a_{ctrl_v} für die Geschwindigkeitsregelung, mittels welcher das Fahrzeug 1 beschleunigt werden soll, um es mit der Maximalgeschwindigkeit vₘₐₓ zu führen.

Hierbei wird die Maximalgeschwindigkeit vₘₐₓ mittels der Begrenzungseinheit 5.1.3 aus einem Minimum aus einer maximalen Trajektoriengeschwindigkeit v_{max_orth}, der gesetzlich zulässigen Maximalgeschwindigkeit v_{max_legal} und der absoluten systemdefinierten Maximalgeschwindigkeit v_{max_sys} gebildet.

Die maximale Trajektoriengeschwindigkeit v_{max_orth} wird aus einer in der vorgegebenen Solltrajektorie Tₛₒₗₗ hinterlegten und für die Ist-Postion Pᵢₛₜ des Fahrzeugs 1 vorgegebenen örtlichen Referenzgeschwindigkeit v_{refPtOrth} sowie aus einer maximal erlaubten Abweichung Δv der örtlichen Referenzgeschwindigkeit v_{refPtOrth} **in** Abhängigkeit von der Ist-Geschwindigkeit vᵢₛₜ und einer Krümmung K der Solltrajektorie Tₛₒₗₗ an der Ist-Position Pᵢₛₜ aus der Kennlinie 5.1.1 ermittelt. In der Kennlinie 5.1.1 wird eine die Abweichung Δv kennzeichnende Prozentzahl %v als zweidimensionale Funktion ermittelt, wobei diese Prozentzahl %v umgekehrt proportional der Krümmung K und der Ist-Geschwindigkeit vᵢₛₜ ist. Die Prozentzahl %v gibt dabei einen prozentualen Anteil der örtlichen Referenzgeschwindigkeit v_{refPtOrth} an, welcher die erlaubte Abweichung Δv bildet. Eine Summe aus der Abweichung Δv und der örtlichen Referenzgeschwindigkeit v_{refPtOrth} ergibt die maximale Trajektoriengeschwindigkeit v_{max_orth} an der Ist-Position Pᵢₛₜ.

So kann beispielsweise bei einer örtlichen Referenzgeschwindigkeit v_{refPtOrth} **von** 130 km/h eine Prozentzahl %v von 5 % erlaubt werden, so dass sich eine erlaubte Abweichung Δv von 6,5 km/h ergibt. Bei einer örtlichen Referenzgeschwindigkeit v_{refPtOrth} **von** 30 km/h kann beispielsweise eine Prozentzahl %v von 20 % erlaubt werden, so dass sich eine erlaubte Abweichung Δv von 6 km/h ergibt. Diese Prozentzahlen %v gelten beispielsweise bei gerader Strecken und sinken mit wachsender Krümmung K, beispielsweise in engen Kurven.

Eine solche auf der örtlichen Referenzgeschwindigkeit v_{refPtOrth} basierte Limitierung bietet den Vorteil, dass auch bei größerer Diskrepanz zwischen der Ist-Position Pᵢₛₜ und der Soll-Position Pₖ die Soll-Geschwindigkeit vₛₒₗₗ an der Ist-Position Pᵢₛₜ dementsprechend limitiert werden kann. Dies ist in den Figuren 1 und 2 am Beispiel der Befahrung des Kreisverkehrs durch das Fahrzeug 1 dargestellt, wobei eine Soll-Vorgabe eine höhere Geschwindigkeit v erwartet, während die aus der örtlichen Referenzgeschwindigkeit v_{refPtOrth} abgeleitete maximale Trajektoriengeschwindigkeit v_{max_orth} dem Fahrzeug 1 nicht erlaubt, schneller zu fahren. Die Regeleinheit 5.1.4 berechnet dann die Stellbeschleunigung a_{ctrl_v}, die erforderlich ist, um eine Differenz zwischen der Ist-Geschwindigkeit vᵢₛₜ und der Maximalgeschwindigkeit vₘₐₓ zu minimieren, d. h. um die Maximalgeschwindigkeit vₘₐₓ zu erreichen und deren Wert zu halten.

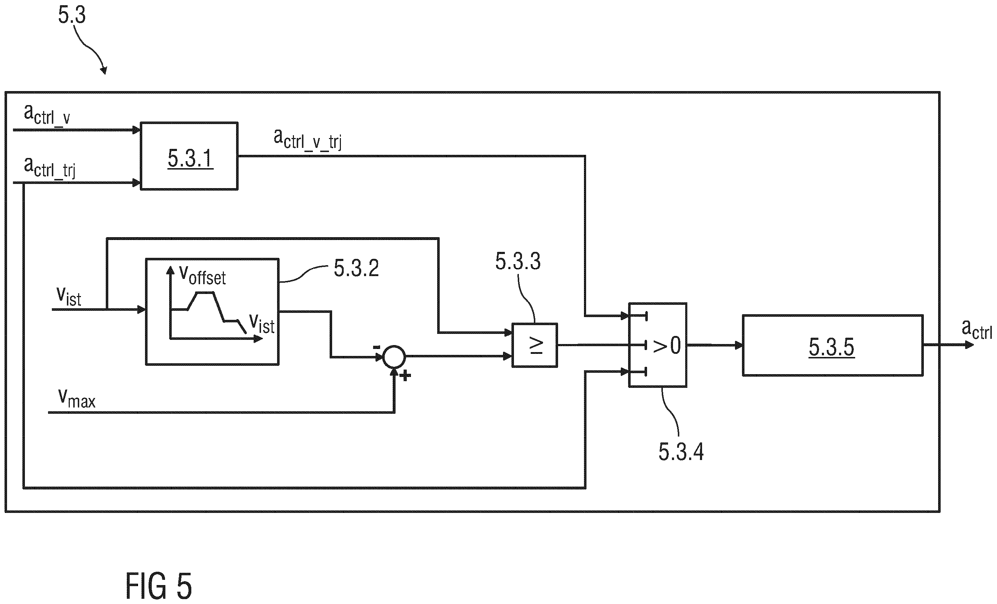

In Figur 5 ist ein Blockschaltbild eines möglichen Ausführungsbeispiels eines Arbiters 5.3 gemäß Figur 3 zur Arbitrierung zwischen einer Trajektorien- und einer Geschwindigkeitsregelung des Fahrzeugs 1 dargestellt.

Der Arbiter 5.3 umfasst hierzu ein Überblendungsmodul 5.3.1, eine Kennlinie 5.3.2, einen Komparator 5.3.3, einen Umschalter 5.3.4 und eine Begrenzungseinheit 5.3.5.

Dabei werden Ausgänge des Trajektorienreglers 5.2 und des Geschwindigkeitsreglers 5.1 in dem Überblendungsmodul 5.3.1 beispielsweise mit einer Min-Funktion, einer Fuzzy-Funktion oder anderen geeigneten Funktion überblendet und es wird aus den Stellbeschleunigungen a_{ctrl_v}, a_{ctrl_trj} eine überblendete Stellbeschleunigung a_{ctrl_v_trj} gebildet. Die überblendete Stellbeschleunigung a_{ctrl_v_trj} wird nur dann durch den Umschalter 5.3.4 zu der Begrenzungseinheit 5.3.5 durchgeleitet, wenn die Geschwindigkeitslimitierung aktiviert ist. Ansonsten wird nur die Trajektorienregelung mit dem Ausgang des Arbiters 5.3 verbunden.

Um zu ermitteln, ob die Geschwindigkeitslimitierung aktiviert ist, wird anhand der Kennlinie 5.3.2 in Abhängigkeit der Ist-Geschwindigkeit vᵢₛₜ ein Geschwindigkeitsoffset v_{offset} ermittelt, welcher von der Ist-Geschwindigkeit vᵢₛₜ subtrahiert wird. Ein resultierender Wert wird von der Maximalgeschwindigkeit vₘₐₓ subtrahiert, wobei das hieraus resultierende Ergebnis gemeinsam mit der Ist-Geschwindigkeit vᵢₛₜ dem Komparator 5.3.3 zugeführt wird. Ist die Ist-Geschwindigkeit vᵢₛₜ größer oder gleich dem Ergebnis der Subtraktion, gibt der Komparator 5.3.3 ein Signal aus, welches größer als Null ist und gibt so an, dass die Geschwindigkeitslimitierung aktiviert ist. Ist die Ist-Geschwindigkeit vᵢₛₜ kleiner als das Ergebnis der Subtraktion, gibt der Komparator 5.3.3 ein Signal aus, welches Null ist und gibt so an, dass die Geschwindigkeitslimitierung inaktiv ist.

Der Geschwindigkeitsoffset v_{offset} ist eine Funktion der Ist-Geschwindigkeit vᵢₛₜ und ist insbesondere auch von dynamischen Eigenschaften des Fahrzeugs 1 abhängig. Der Geschwindigkeitsoffset v_{offset} wird beispielsweise experimentell ermittelt und kann in Form einer Lookup-Tabelle implementiert werden.

Eine solche Funktion des Arbiters 5.3 führt zu den Vorteilen, dass die Geschwindigkeitsregelung nicht die ganze Zeit aktiv ist, wie dies zum Beispiel der Fall ist, wenn nur eine Min-Funktion der Stellbeschleunigung a_{ctrl_trj} als Arbitrierung verwendet würde. Vielmehr ist die Geschwindigkeitsregelung nur kurz bevor die Maximalgeschwindigkeit vₘₐₓ erreicht wird aktiv, so dass die Trajektorienregelung größtenteils aktiv sein kann. Da die Geschwindigkeitsregelung frühzeitig aktiv wird, kann eine Überschreitung der Maximalgeschwindigkeit vₘₐₓ sicher vermieden werden.

### Bezugszeichenliste

- 1: Fahrzeug
- 2: Vorrichtung
- 3: Recheneinheit
- 3.1: Trajektorienplanungsmodul
- 4: Umgebungserfassungssensorik
- 5: Recheneinheit
- 5.1: Geschwindigkeitsregler
- 5.1.1: Kennlinie
- 5.1.2: Multiplikator
- 5.1.3: Begrenzungseinheit
- 5.1.4: Regeleinheit
- 5.2: Trajektorienregler
- 5.3: Arbiter
- 5.3.1: Überblendungsmodul
- 5.3.2: Kennlinie
- 5.3.3: Komparator
- 5.3.4: Umschalter
- 5.3.5: Begrenzungseinheit
- 6: Beschleunigungsregeleinheit

- a_{ctrl}: resultierende Stellbeschleunigung
- a_{ctrl_trj}: Stellbeschleunigung
- a_{ctrl_v}: Stellbeschleunigung
- a_{ctrl_v_trj}: überblendete Stellbeschleunigung
- aᵢₛₜ: Ist-Beschleunigung
- K: Krümmung
- Pᵢₛₜ: Ist-Position
- Pₖ: Soll-Position
- t: Zeit
- Tₛₒₗₗ: Solltrajektorie
- Tₛₒₗₗ₁ bis Tₛₒₗₗ₃: Trajektorienabschnitt
- UD: Daten
- v: Geschwindigkeit
- vᵢₛₜ: Ist-Geschwindigkeit
- vₘₐₓ: Maximalgeschwindigkeit
- v_{max_legal}: gesetzlich zulässige Maximalgeschwindigkeit
- v_{max_orth}: maximale Trajektoriengeschwindigkeit
- v_{max_sys}: absolute systemdefinierte Maximalgeschwindigkeit
- v_{offset}: Geschwindigkeitsoffset
- v_{refPtOrth}: örtliche Referenzgeschwindigkeit
- vₛₒₗₗ: Soll-Geschwindigkeit
- Z: Ist-Zustand

- %v: Prozentzahl
- Δv: Abweichung

## Patentansprüche

1. Verfahren zur Längsregelung eines Fahrzeugs (1) in Abhängigkeit einer Solltrajektorie (Tₛₒₗₗ), welche eine Reihe von vom Fahrzeug (1) über die Zeit (t) einzunehmenden Soll-Positionen (Pₖ) vorgibt, wobei
- basierend auf einem Ist-Zustand (Z) des Fahrzeugs (1) eine Stellbeschleunigung (a_{ctrl_trj}) zur Trajektorienregelung, mittels welcher das Fahrzeug (1) gemäß Vorgaben der Solltrajektorie (Tₛₒₗₗ) beschleunigt werden soll, ermittelt wird,
- basierend auf einer Ist-Geschwindigkeit (vᵢₛₜ) des Fahrzeugs (1) und einer vorgegebenen Maximalgeschwindigkeit (vₘₐₓ), welche bei einer Abfahrt der Soll-Trajektorie (Tₛₒₗₗ) nicht überschritten werden soll, eine Stellbeschleunigung (a_{ctrl_v}) für eine Geschwindigkeitsregelung ermittelt wird, mittels welcher das Fahrzeug (1) beschleunigt werden soll, um es mit der Maximalgeschwindigkeit (vₘₐₓ) zu führen,
- beide Stellbeschleunigungen (a_{ctrl_trj}, a_{ctrl_v}) einem Arbiter (5.3) zugeführt werden, welcher aus diesen eine resultierende Stellbeschleunigung (a_{ctrl}) ermittelt,
- das Fahrzeug (1) gemäß der resultierenden Stellbeschleunigung (a_{ctrl}) beschleunigt wird,
- die vorgegebene Maximalgeschwindigkeit (vₘₐₓ) aus einem Minimum aus einer maximalen Trajektoriengeschwindigkeit (v_{max_orth}), einer gesetzlich zulässigen Maximalgeschwindigkeit (v_{max_legal}) und einer absoluten systemdefinierten Maximalgeschwindigkeit (v_{max_sys}) ermittelt wird,
- die maximale Trajektoriengeschwindigkeit (v_{max_orth}) aus einer Summe einer in der Solltrajektorie (Tₛₒₗₗ) vorgegebenen örtlichen Referenzgeschwindigkeit (v_{refPtOrth}) an einer Ist-Position (Pᵢₛₜ) des Fahrzeugs (1) und einer maximal erlaubten Abweichung (Δv) der örtlichen Referenzgeschwindigkeit (v_{refPtOrth}) in Abhängigkeit von der Ist-Geschwindigkeit (vᵢₛₜ) und einer Krümmung (K) der Solltrajektorie (Tₛₒₗₗ) an der Ist-Position (Pᵢₛₜ) des Fahrzeugs (1) ermittelt wird und
- die absolute systemdefinierte Maximalgeschwindigkeit (v_{max_sys}) in einem zur automatisierten Steuerung des Fahrzeugs vorgesehenen System als Systembeschränkung in Form einer für das Fahrzeug definierten Maximalgeschwindigkeit vorgegeben ist.

2. Verfahren nach Anspruch 1, wobei bei der Ermittlung der Stellbeschleunigung (a_{ctrl_trj}) eine Krümmung (K) der Solltrajektorie (Tₛₒₗₗ) berücksichtigt wird.

3. Verfahren nach einem der vorhergehenden Ansprüche, wobei der Ist-Zustand (Z) des Fahrzeugs (1) zumindest aus der Ist-Geschwindigkeit (vᵢₛₜ), einer Ist-Beschleunigung (aᵢₛₜ) und/oder einer Ist-Position (Pᵢₛₜ) des Fahrzeugs (1) gebildet wird.

4. Verfahren nach einem der vorhergehenden Ansprüche, wobei
- die Solltrajektorie (Tₛₒₗₗ) einem Trajektorienregler (5.2) zugeführt wird, mittels welchem anhand der Regler-Stellbeschleunigung (a_{ctrl}) das Fahrzeug (1) gemäß den Vorgaben der Solltrajektorie (Tₛₒₗₗ) beschleunigt werden soll, und
- die resultierende Stellbeschleunigung (a_{ctrl}) einer dem Trajektorienregler (5.2) unterlagerten Beschleunigungsregeleinheit (6) zugeführt wird, welcher eine reale Beschleunigung des Fahrzeugs (1) steuert und/oder regelt.

5. Verfahren nach einem der vorhergehenden Ansprüche, wobei dann, wenn die resultierende Stellbeschleunigung (a_{ctrl}) einen negativen Wert annimmt, das Fahrzeug (1) verzögert wird.

6. Vorrichtung (2) zur Längsregelung eines Fahrzeugs (1) in Abhängigkeit einer Solltrajektorie (Tₛₒₗₗ), welche eine Reihe von vom Fahrzeug (1) über die Zeit (t) einzunehmenden Soll-Positionen (Pₖ) vorgibt, wobei
- ein Trajektorienregler (5.2) vorgesehen ist, welcher anhand einer diesem zugeführten Solltrajektorie (Tₛₒₗₗ) basierend auf einem Ist-Zustand (Z) des Fahrzeugs (1) eine Stellbeschleunigung (a_{ctrl_trj}) zur Trajektorienregelung, mittels welcher das Fahrzeug (1) gemäß Vorgaben der Solltrajektorie (Tₛₒₗₗ) beschleunigt werden soll, ermittelt,
- ein Geschwindigkeitsregler (5.1) vorgesehen ist, welcher basierend auf einer Ist-Geschwindigkeit (vᵢₛₜ) des Fahrzeugs (1) und einer vorgebbaren Maximalgeschwindigkeit (vₘₐₓ), welche bei einer Abfahrt der Soll-Trajektorie (Tₛₒₗₗ) nicht überschritten werden soll, eine Stellbeschleunigung (a_{ctrl_v}) für eine Geschwindigkeitsregelung ermittelt, mittels welcher das Fahrzeug (1) beschleunigt werden soll, um es mit der Maximalgeschwindigkeit (vₘₐₓ) zu führen,
- ein Arbiter (5.3) vorgesehen ist, welcher anhand der beiden ermittelten Stellbeschleunigungen (a_{ctrl_trj}, a_{ctrl_v}) eine resultierende Stellbeschleunigung (a_{ctrl}) ermittelt,
- eine dem Trajektorienregler (5.2) unterlagerte Beschleunigungsregeleinheit (6) vorgesehen ist, welche das Fahrzeug (1) gemäß der resultierenden Stellbeschleunigung (a_{ctrl}) beschleunigt,
- der Geschwindigkeitsregler (5.1) eine Begrenzungseinheit (5.1.3) umfasst, welche die vorgegebene Maximalgeschwindigkeit (vₘₐₓ) aus einem Minimum aus einer maximalen Trajektoriengeschwindigkeit (v_{max_orth}), einer gesetzlich zulässigen Maximalgeschwindigkeit (v_{max_legal}) und einer absoluten systemdefinierten Maximalgeschwindigkeit (v_{max_sys}) bildet,
- die maximale Trajektoriengeschwindigkeit (v_{max_orth}) aus einer Summe einer in der Solltrajektorie (Tₛₒₗₗ) vorgegebenen örtlichen Referenzgeschwindigkeit (v_{refPtOrth}) an einer Ist-Position (Pᵢₛₜ) des Fahrzeugs (1) und einer maximal erlaubten Abweichung (Δv) der örtlichen Referenzgeschwindigkeit (v_{refPtOrth}) in Abhängigkeit von der Ist-Geschwindigkeit (vᵢₛₜ) und einer Krümmung (K) der Solltrajektorie (Tₛₒₗₗ) an der Ist-Position (Pᵢₛₜ) des Fahrzeugs (1) ermittelt ist und
- die absolute systemdefinierte Maximalgeschwindigkeit (v_{max_sys}) in einem zur automatisierten Steuerung des Fahrzeugs vorgesehenen System als Systembeschränkung in Form einer für das Fahrzeug definierten Maximalgeschwindigkeit vorgegeben ist.

7. Vorrichtung (2) nach Anspruch 6, wobei die Beschleunigungsregeleinheit (6) ein Fahrzeugbremssystem ist.

## Claims

1. Method for closed loop longitudinal control of a vehicle (1) according to a target trajectory (Tₛₒₗₗ) which specifies a series of target positions (Pₖ) to be assumed by the vehicle (1) over time (t), wherein
- an actual state (Z) of the vehicle (1) is taken as a basis for determining a control acceleration (a_{ctrl_trj}) for closed loop trajectory control by means of which the vehicle (1) is supposed to be accelerated in accordance with specifications of the target trajectory (Tₛₒₗₗ),
- an actual velocity (vᵢₛₜ) of the vehicle (1) and a specified maximum velocity (vₘₐₓ) which is not supposed to be exceeded when travelling along the target trajectory (Tₛₒₗₗ) are taken as a basis for determining a control acceleration (a_{ctrl_v}) for closed loop velocity control by means of which the vehicle (1) is supposed to be accelerated in order to guide it at the maximum velocity (vₘₐₓ),
- the two control accelerations (a_{ctrl_trj}, a_{ctrl_v}) are supplied to an arbiter (5.3) which uses them to determine a resulting control acceleration (a_{ctrl}),
- the vehicle (1) is accelerated in accordance with the resulting control acceleration (a_{ctrl}),
- the specified maximum velocity (vₘₐₓ) is determined from a minimum from a maximum trajectory velocity (v_{max_orth}), a legally permissible maximum velocity (v_{max_legal}) and an absolute system-defined maximum velocity (v_{max_sys}),
- the maximum trajectory velocity (v_{max_orth})is determined from a sum of a local reference velocity (v_{refPtOrth}), specified in the target trajectory (Tₛₒₗₗ), at an actual position (Pᵢₛₜ) of the vehicle (1) and a maximum permitted deviation (Δv) of the local reference velocity (v_{refPtOrth}) according to the actual velocity (vᵢₛₜ) and a curvature (K) of the target trajectory (Tₛₒₗₗ) at the actual position (Pᵢₛₜ) of the vehicle (1) and
- the absolute system-defined maximum velocity (v_{max_sys}) is specified as a system restriction in the form of a maximum velocity defined for the vehicle in a system intended for automated control of the vehicle.

2. Method according to Claim 1, wherein a curvature (K) of the target trajectory (Tₛₒₗₗ) is taken into account when determining the control acceleration (a_{ctrl_trj}) .

3. Method according to either of the preceding claims, wherein the actual state (Z) of the vehicle (1) is formed from at least the actual velocity (vᵢₛₜ), an actual acceleration (aᵢₛₜ) and/or an actual position (Pᵢₛₜ) of the vehicle (1).

4. Method according to one of the preceding claims, wherein
- the target trajectory (Tₛₒₗₗ) is supplied to a closed loop trajectory controller (5.2) by means of which the closed loop controller control acceleration (a_{ctrl}) is supposed to be used to accelerate the vehicle (1) in accordance with the specifications of the target trajectory (Tₛₒₗₗ), and
- the resulting control acceleration (a_{ctrl}) is supplied to a closed loop acceleration control unit (6) which is subordinate to the closed loop trajectory controller (5.2) and which open loop controls and/or closed loop controls a real acceleration of the vehicle (1).

5. Method according to one of the preceding claims, wherein the vehicle (1) is decelerated when the resulting control acceleration (a_{ctrl}) assumes a negative value.

6. Apparatus (2) for closed loop longitudinal control of a vehicle (1) according to a target trajectory (Tₛₒₗₗ) which specifies a series of target positions (Pₖ) to be assumed by the vehicle (1) over time (t), wherein
- there is provision for a closed loop trajectory controller (5.2) which uses a target trajectory (Tₛₒₗₗ) supplied to it to take an actual state (Z) of the vehicle (1) as a basis for determining a control acceleration (a_{ctrl_trj}) for closed loop trajectory control by means of which the vehicle (1) is supposed to be accelerated in accordance with specifications of the target trajectory (Tₛₒₗₗ),
- there is provision for a closed loop velocity controller (5.1) which takes an actual velocity (vᵢₛₜ) of the vehicle (1) and a specifiable maximum velocity (vₘₐₓ) which is not supposed to be exceeded when travelling along the target trajectory (Tₛₒₗₗ) as a basis for determining a control acceleration (a_{ctrl_v}) for closed loop velocity control by means of which the vehicle (1) is supposed to be accelerated in order to guide it at the maximum velocity (vₘₐₓ),
- there is provision for an arbiter (5.3) which uses the two determined control accelerations (a_{ctrl_trj}, a_{ctrl_v}) to determine a resulting control acceleration (a_{ctrl}),
- there is provision for a closed loop acceleration control unit (6) which is subordinate to the closed loop trajectory controller (5.2) and which accelerates the vehicle (1) in accordance with the resulting control acceleration (a_{ctrl}),
- the closed loop velocity controller (5.1) comprises a limiting unit (5.1.3) which forms the specified maximum velocity (vₘₐₓ) from a minimum from a maximum trajectory velocity (v_{max_orth}), a legally permissible maximum velocity (v_{max_legal}) and an absolute system-defined maximum velocity (v_{max_sys}),
- the maximum trajectory velocity (v_{max_orth})is determined from a sum of a local reference velocity (v_{refPtOrth}), specified in the target trajectory (Tₛₒₗₗ), at an actual position (Pᵢₛₜ) of the vehicle (1) and a maximum permitted deviation (Δv) of the local reference velocity (v_{refPtOrth}) according to the actual velocity (vᵢₛₜ) and a curvature (K) of the target trajectory (Tₛₒₗₗ) at the actual position (Pᵢₛₜ) of the vehicle (1) and
- the absolute system-defined maximum velocity (v_{max_sys}) is specified as a system restriction in the form of a maximum velocity defined for the vehicle in a system intended for automated control of the vehicle.

7. Apparatus (2) according to Claim 6, wherein the closed loop acceleration control unit (6) is a vehicle braking system.

## Revendications

1. Procédé de commande longitudinale d'un véhicule (1) en fonction d'une trajectoire cible (Tₛₒₗₗ), qui spécifie une série de positions cibles (Pₖ) devant être adoptées par le véhicule (1) au cours du temps (t), dans lequel
- sur la base d'un état réel (Z) du véhicule (1), une accélération de commande (a_{ctrl}) est déterminée pour le contrôle de la trajectoire, au moyen de laquelle le véhicule (1) doit être accéléré conformément aux spécifications de la trajectoire cible (Tₛₒₗₗ),
- une accélération de commande (a_{ctrl_v}) est déterminée pour la régulation de la vitesse, sur la base d'une vitesse réelle (vᵢₛₜ) du véhicule (1) et d'une vitesse maximale prédéfinie (vₘₐₓ) qui ne doit pas être dépassée lors d'un écartement d'avec la trajectoire cible (Tₛₒₗₗ), au moyen de laquelle le véhicule (1) doit être accéléré afin d'être conduit à la vitesse maximale (vₘₐₓ),
- les deux accélérations de commande (a_{ctrl_trj}, a_{ctrl_v}) sont transmises à un arbitre (5.3) qui, à partir d'elles, détermine une accélération de commande résultante (a_{ctrl}),
- le véhicule (1) est accéléré en fonction de l'accélération de commande résultante (a_{ctrl}),
- la vitesse maximale prédéfinie (vₘₐₓ) est déterminée à partir d'un minimum d'une vitesse maximale de trajectoire (v_{max_orth}), d'une vitesse maximale autorisée par la loi (v_{max_legal}) et d'une vitesse maximale absolue définie par le système (v_{max_sys}),
- la vitesse maximale de trajectoire (v_{max_orth})est déterminée à partir de la somme d'une vitesse de référence locale (v_{refPtOrth}) prédéfinie dans la trajectoire cible (Tₛₒₗₗ) à une position réelle (Pᵢₛₜ) du véhicule (1) et d'un écart maximal admissible (Δv) de la vitesse de référence locale (v_{refPtOrth}) en fonction de la vitesse réelle (vᵢₛₜ) et d'une courbure (K) de la trajectoire cible (Tₛₒₗₗ) à la position réelle (Pᵢₛₜ) du véhicule (1), et
- la vitesse maximale absolue définie par le système (v_{max_sys}) est prédéfinie dans un système prévu pour la commande automatisée du véhicule en tant que limitation du système sous la forme d'une vitesse maximale définie pour le véhicule.

2. Procédé selon la revendication 1, dans lequel une courbure (K) de la trajectoire cible (Tₛₒₗₗ) est prise en compte lors de la détermination de l'accélération de commande (a_{ctrl_trj}) .

3. Procédé selon l'une des revendications précédentes, dans lequel l'état réel (Z) du véhicule (1) est établi au moins à partir d'une vitesse réelle (vᵢₛₜ), d'une accélération réelle (aᵢₛₜ) et/ou d'une position réelle (Pᵢₛₜ) du véhicule (1).

4. Procédé selon l'une des revendications précédentes, dans lequel
- la trajectoire cible (Tₛₒₗₗ) est délivrée à un dispositif de commande de trajectoire (5.2), qui, en utilisant l'accélération de commande résultante (a_{ctrl}), doit accélérer le véhicule (1) conformément aux spécifications de la trajectoire cible (Tₛₒₗₗ), et
- l'accélération de commande résultante (a_{ctrl}) est transmise à une unité (6) de commande d'accélération subordonnée au régulateur de trajectoire (5.2), qui commande et/ou régule une accélération réelle du véhicule (1).

5. Procédé selon l'une des revendications précédentes, dans lequel le véhicule (1) est ralenti lorsque l'accélération de commande résultante (a_{ctrl}) prend une valeur négative.

6. Dispositif (2) pour la commande longitudinale d'un véhicule (1) en fonction d'une trajectoire cible (Tₛₒₗₗ), qui spécifie une série de positions cibles (Pₖ) devant être adoptées par le véhicule (1) au cours du temps (t), dans lequel
- -un régulateur de trajectoire (5.2) est prévu, lequel détermine, en utilisant une trajectoire cible (Tₛₒₗₗ) qui lui est transmise et sur la base d'un état réel (Z) du véhicule (1), une accélération de commande (a_{ctrl_trj}) pour le contrôle de la trajectoire, au moyen de laquelle le véhicule (1) doit être accéléré conformément aux spécifications de la trajectoire cible (Tₛₒₗₗ),
- un régulateur de vitesse (5.1) est prévu, lequel, sur la base d'une vitesse réelle (vᵢₛₜ) du véhicule (1) et d'une vitesse maximale prédéfinie (vₘₐₓ) qui ne doit pas être dépassée lors d'un écartement d'avec la trajectoire cible (Tₛₒₗₗ), détermine une accélération de commande (a_{ctrl_v}) pour une régulation de vitesse, au moyen de laquelle le véhicule (1) doit être accéléré afin d'être conduit à la vitesse maximale (vₘₐₓ),
- un arbitre (5.3) est prévu, qui détermine une accélération de commande résultante (a_{ctrl}) en utilisant les deux accélérations de commande déterminées (a_{ctrl_trj}, a_{ctrl_v}),
- une unité (6) de commande d'accélération est prévue, subordonnée au régulateur de trajectoire (5.2), qui accélère le véhicule (1) en fonction de l'accélération de commande résultante (a_{ctrl_lim}),
- le régulateur de vitesse (5.1) comprend une unité de limitation (5.1.3) qui forme la vitesse maximale prédéfinie (vₘₐₓ) à partir d'un minimum d'une vitesse maximale de trajectoire (v_{max_orth}), d'une vitesse maximale autorisée par la loi (v_{max_legal}) et d'une vitesse maximale absolue définie par le système (v_{max_sys}),
- la vitesse maximale de trajectoire (v_{max_orth})est déterminée à partir de la somme d'une vitesse de référence locale (v_{refPtOrth}) prédéfinie dans la trajectoire cible (Tₛₒₗₗ) en une position réelle (Pᵢₛₜ) du véhicule (1) et d'un écart maximal admissible (Δv) de la vitesse de référence locale (v_{refPtOrth}) en fonction de la vitesse réelle (vᵢₛₜ) et d'une courbure (K) de la trajectoire cible (Tₛₒₗₗ) à la position réelle (Pᵢₛₜ) du véhicule (1), et
- la vitesse maximale absolue définie par le système (v_{max_sys}) est prédéfinie dans un système prévu pour la commande automatisée du véhicule en tant que limitation du système sous la forme d'une vitesse maximale définie pour le véhicule.

7. Dispositif (2) selon la revendication 6, dans lequel l'unité (6) de commande d'accélération est un système de freinage du véhicule.
